# EUROPEAN PATENT APPLICATION

(11) **EP 2 810 982 A1**
(43) Date of publication of application: **10.12.2014**
(21) Application number: 13170757.2
(22) Date of filing: 06.06.2013
(51) Int. Cl.: C08K 5/12

(54) **Dialkyl esters of 1,4' cyclohexane di-carboxylic acid and their use as plasticisers**

(71) Applicant: ExxonMobil Chemical Patents Inc., Baytown, TX 77520 (US)
(72) Inventor: Leroy, Bernard, 1341 Ceroux-Mousty (BE); Naert, Didier, 1200 Bruxelles (BE); Buess, Philippe Louis, 3090 Overijse (BE)
(74) Representative: Troch, Geneviève

(57) **Abstract**

Dialkyl esters of 1-4 cyclohexane di-carboxylic acid in which the alkyl groups contain from 5 to 13 carbon atoms are used as plasticisers particularly for polyvinyl chloride.

## Description

### FIELD

The present invention relates to the use of esters of 1,4-cyclohexane dicarboxylic acid as plasticisers in particular as plasticisers for polyvinyl chloride (PVC).

### BACKGROUND

Esters of ortho phthalic acid, terephthalic acid, iso phthalic acid, cyclohexane-1,2-dicarboxcylic acid, cyclohexane-1,3-dicarboxylic acid and cyclohexane-1,4-dicarboxylic acid are known. Certain of the cyclohexane dicarboxylic acid ester have been used or proposed for use as plasticisers for polymers and in particular as plasticisers for polyvinyl chloride.

Plasticisers are required to have a range of properties depending upon the grade and type of polymer with which they are to be used and the nature of the product to be produced from the plasticised polymer. For example, plasticised polyvinyl chloride is used in the production of a range of products ranging from semi-rigid to totally flexible products. Examples including wall and floor covering materials, shoe soles, wire and cable, car underbody coating, film and sheets for roofing materials or adhesive foils, vinyl gloves, carpet backing, artificial leather and a range of other materials. In each instance the grade of polyvinyl chloride will be selected according to the use to which the plasticised formulation is to be put and the plasticiser will be selected according to the grade of polyvinyl chloride and the method by which the plasticised polyvinyl chloride formulation is to be converted into the finished article. Examples of conversion techniques that employ plasticised polyvinyl chloride formulations include extrusion, calendaring, spread coating, rotational and slush molding, powder coating and dipping.

The properties required for a plasticiser are first compatibility with the polyvinyl chloride, the range of flexibility achieved, the plasticiser efficiency, the desired gelling and fusion under the selected process conditions usually time and temperature, performance in the finished article including good low temperature performance. In particular it is important to minimize the volatilisation of the plasticiser during processing and from the finished article to reduce loss of mechanical properties and embrittlement, the release of volatile organic compounds in the atmosphere. Reducing plasticiser losses will also increase the life span of finished flexible PVC articles.

In certain applications plasticiser mixtures are used in an attempt to optimise plasticiser performance, particularly when it comes to formulating a dispersion of fine resin particles in plasticizer (plastisols) exhibiting good rheology and gelation.

The present invention relates to improved plasticisers and to improved polyvinyl chloride compositions containing the plasticisers. Polyvinyl chloride is widely used in a variety of applications. Polyvinyl chloride is commonly used in a mixture with a plasticiser. The nature of the polyvinyl chloride, the nature of the plasticiser and the proportions of the two materials are chosen to provide a polyvinyl chloride composition having the desired properties for a particular application. Examples of the major uses of plasticised polyvinyl chloride compositions include wire and cable sheathing and insulation, other electrical applications such as plugs, film, foil and sheeting, flooring, wall covering, roofing and membranes. Other uses include films such as stationary films, cling films, adhesives tapes and agricultural films. Polyvinyl chloride is also used in medical applications such as blood bags, tubing and bottle caps, further uses include footwear,closures, cling films, flexible hoses and guttering and fabric coating like tarpaulins or synthetic leather.

Phthalate esters are widely used as plasticisers for polyvinyl chloride. Examples of phthalate esters that are used include dioctyl phthalate, di-isononyl phthalate, di-isodecyl phthalate, di-2-propylheptyl phthalate, di-isooctyl phthalate, di-isoheptyl phthalate and di-2 ethylhexyl phthalate (DEHP) based on phthalic anhydride or ortho-phthalic acid. Typical commercial materials include the Jayflex™ plasticisers, Jayflex™ DINP and Jayflex™ DIDP available from ExxonMobil, the Palatinol™ plasticisers marketed by BASF and Vestinol™ from Oxeno, the Eastman 168 (DOTP) marketed by Eastman Chemical.

There is a constant need to improve the properties of plasticisers to provide polyvinyl chloride compositions having improved properties. There is also a need for alternatives to low molecular weight ortho-phthalates due to restrictions in some sensitive applications. In addition there is a need to improve the properties of plasticisers and the processing and properties of polyvinyl chloride compositions based thereon.

It has also been proposed that esters of cyclohexane carboxylic acids particularly esters of cyclohexane dicarboxylic acids may be used as plasticisers for polyvinyl chloride. For example United States defensive patent publication T 864003 discloses the use of cyclohexane-1,4-dicarboxylic acid esters as plasticisers. Such materials are also described in a Union Carbide Chemicals Company Technical Information bulletin Number F-7893B of November 1957 entitled "Flexol" Plasticiser CC-55. WO 03/029339 relates to esters of cyclohexane dicarboxylic acids in particular esters of cyclohexane-1,2-dicarboxylic acids.

US 2002/0019559 discloses a range of esters of cyclohexane-1,2-dicarboxylic acid prepared by the hydrogenation of the corresponding phthalates. According to US 2002/0019559 the cyclohexanoates have lower density and viscosity and yield an improvement in the low temperature flexibility of the plastics when compared with the corresponding phthalates. JP 2001-207002 is concerned with esters of 1,2-cyclohexane dicarboxylic acid made from mixed alcohols of carbon numbers 4 to 13 which contain from 80 to 97 wt % of a branched 9 carbon atom alkyl group. The Examples employ mixtures of iso- and normal C9 alcohols. JP 2001-207002 compares, as plasticisers, these esters with dioctyl phthalate find improved cold resistance, viscosity and viscosity stability over time. WO 03/029339 discloses branched chain C7, C8, C9 and C10 bis esters of cyclohexane-1,2-dicarboxylic acid.

Esters of cyclohexane 1,2 dicarboxylic acid have shown to exhibit poor solvating strength (high solution temperature, the temperature required to dissolve a certain quantity of PVC) due to their lower polarity, leading to a very narrow range of useful alcohols. A C9 ester of cyclohexane-1,2-dicarboxylic acid, like the commercial product Hexamoll™ DINCH commercialized by BASF, is known to require significantly higher processing temperature (higher gelation and fusion temperatures), limiting considerably its use in both plastisols and compounding applications.

Similarly, although esters of benzene-1,4-dicarboxylic acid (terephthalic acid) are known as plasticisers they exhibit poor solvating strength compared to ortho-phthalates, limiting the useful alcohol range to alkyl chains comprising C4 to C8 carbons.

### SUMMARY

Surprisingly it has been found that esters of 1,4-cyclohexane dicarboxylic acid in which the alkyl groups contain from 5 to 13 carbon atoms provide improved processing and gelation (good solvating strength) to PVC compositions, they also exhibit low freezing point or pour point, improved low temperature performance and offer PVC plastisols of low viscosity and good storage stability.

### DETAILED DESCRIPTION

US 7,208,545 provides a list of esters of cyclohexane-1,3 and -1,4 dicarboxylic acids comprising bis C4 to C8 branched chain, and bis C5, C7 and C8 straight chain and branched or linear C8/C10 esters of cyclohexane-1,4-dicarboxylic acid and indicates that they can be prepared by hydrogenation of the corresponding phthalates and their use can avoid certain concerns about phthalates on health grounds. US 7,973,194 discloses diesters of cyclohexane-1,4-dicarboxylic acid in which the ester group maybe a C1 to C13 alkyl group, a C2 to C 13 ether group, a cycloalkane group or an aromatic group. The alkyl groups may be straight chain or branched chain and can range from C1 to C13 alkyl groups. Preferably, the total number of carbon atoms in the two groups are less than 18 and the alkyl groups are preferably different. Preferred plasticiser esters are dibutyl-1,4-cyclohexane dicarboxylate, dibenzyl-1,4-cyclohexane dicarboxylate and butylbenzyl-1,4-cyclohexane dicarboxylate.

The esters of US 7,973,194 are said to be high solvating plasticisers. The Example shows that butylbenzyl-1,4-cyclohexane dicarboxylate fuses and gels at the same temperatures as butylbenzyl ortho-phthalate, dibutyl-1,4-cyclohexane dicarboxylate, dibutyl ortho-phthalate or dibutyl terephalate.

It is preferred that the esters of this invention are produced from cyclohexane-1,4-dicarboxylic acid or dimethyl cyclohexane-1,4-dicarboxylate and mixtures of lower carbon number alcohols and higher carbon number alcohols, typically C9 to C13 alcohols. When higher carbon number alcohols such as C6, C7, C8, C9 and C10 alcohols are used, it is preferred that they are branched chain alcohols preferably branched alcohols containing predominantly methyl branches such as the Exxal™ iso-alcohols available from Exxon Mobil Chemical.

The di-esters of this invention can also be produced by hydrogenating the corresponding terephthalic esters. The alcohols may be linear or branched although it is preferred that at least the higher carbon number alcohols are branched alkyl chain.

The esters may be used as primary plasticisers across the range of plasticised polyvinyl chloride materials. The esters may also be used in non-PVC compositions such as plasticisers for polyurethane, acrylics, silicones or polysulphides. In particular they are applicable to the production of semi-rigid polyvinyl chloride compositions which typically contain from 10 to 50 parts, preferably 15 to 35 parts, more preferably 20 to 30 parts of plasticiser per 100 parts of polyvinyl chloride. The esters are also useful in flexible polyvinyl chloride compositions which typically contain from 40 to 100 parts preferably 45 to 80 parts, more preferably from 48 to 52 parts per 100 parts of polyvinyl chloride and also to the highly flexible compositions which typically contain from 70 to 110 parts, preferably 80 to 100 parts, more preferably 90 to 100 parts of plasticiser per 100 parts of polyvinyl chloride; the parts being by weight.

The semi-rigid compositions are typically used for the production of pipes, some wire and cable insulation or sheathing, floor tiles, window shades, films, blood bags and medical tubing. Flexible compositions are typically used for the production of sheeting, upholstery, medical tubing, garden hoses, pool liners, water beds and the like. Very flexible compositions are used in the production of coated cloth, toys, shoe soles and the like. The esters of cyclohexane-1,4-dicarboxylic acid of this invention are particularly useful in the production of medical articles such as blood bags and medical tubing and in toys and materials used for food contact such as bottle caps and films where di-2-ethyhexyl phthalate has traditionally been used and there are some concerns about its toxicity.

In another aspect of the present invention the esters of cyclohexane-1,4-dicarboxylic acid of this invention are used together with other plasticisers. For example, the esters of cyclohexane 1,4-dicarboxylic acid may be used with plasticisers such as dibasic acid esters like adipates, azelates, sebacates, succinates, phthalate esters, benzoate esters like alkyl mono benzoates and gycol di-benzoates, trimellitate esters, vegetable oil derived esters whether from soy bean oil, castor oil and various polymeric plasticisers, some of which have been described previously. When used in plasticiser blends the relative proportions of the plasticisers that are used will depend upon the desired properties. However we prefer to use at least 5 wt. %, more preferably at least 10 wt. %, more preferably at least 15 wt. %, more preferably at least 20 wt. %, more preferably at least 25 wt. %, more preferably at least 30 wt. %, more preferably at least 35 wt %, more preferably at least 40 wt %, more preferably at least 45 wt. %, more preferably at least 50 wt. %, more preferably at least 55 wt. %, more preferably at least 60 wt. %, more preferably at least 65 wt. %, more preferably at least 70 wt. %, more preferably at least 75 wt. %, more preferably at least 80 wt %, more preferably at least 85 wt. %, more preferably at least 90 wt. %, of the ester of the cyclohexane-1,4-dicarboxylic acid based on the total weight of plasticiser present. In a preferred embodiment wherein a mixture of plasticisers is used and one of the plasticisers is a phthalate, the mixture preferably comprises no more than 95 wt. % cyclohexane-1,4-dicarboxylic acid. Preferred ranges include between 0.01 and 95 wt. %, more preferably 5 to 90 wt. %, more preferably 10 to 80 wt. %, more preferably 20 to 70 wt. %, more preferably 30 to 60 wt. % of the ester of the cyclohexane-1,4-dicarboxylic acid.

In a further embodiment, the invention provides roofing, tarpaulins, tents, films, sheeting, floor covering, blood bags and medical tubing, cables, shoes and automotive upholstery obtained from a plasticised polyvinyl chloride composition containing from 20 to 100 parts by weight preferably 30 to 90 parts by weight, more preferably 40 to 80 parts by weight, more preferably 50 to 70 parts by weight of a plasticiser composition containing one or more cyclohexane-1,4-dicarboxylic acid esters of this invention per 100 parts of polyvinyl chloride.

One widespread use of polyvinyl chloride is as a plastisol. A plastisol is a fluid or a paste consisting of a mixture of polyvinyl chloride and a plasticiser optionally containing various additives. A plastisol is used to produce layers of polyvinyl chloride which can be built up on top of each other and then fused to produce coherent articles of flexible polyvinyl chloride. Plastisols are useful in the production of flooring, tents, tarpaulins, coated fabrics such as automobile upholstery, in car underbody coatings, in mouldings and other consumer products. Plastisols are also used in footwear, fabric coating, toys, vinyl gloves, flooring products and wallpaper. Plastisols typically contain 40 to 200 parts by weight, more typically 50 to 150 parts by weight, more typically 70 to 120 parts by weight, more typically 90 to 110 parts by weight of plasticiser per 100 parts of polyvinyl chloride.

Plastisols are usually made from polyvinyl chloride that has been produced by emulsion polymerisation or micro suspension polymerisation. The plastisol may be produced by the manufacturer of the polyvinyl chloride or a compounder and shipped to the user in fluid form. Alternatively the plastisol may be produced by the user. In either instance, although particularly when the plastisol is produced by the manufacturer of the polyvinyl chloride or a compounder, it is important that the plastisol viscosity be stable over time to allow ready processing after storage.

Phthalate esters are widely used as plasticisers in plastisols. Plastisols are in the form of a paste and are usually employed by spreading followed by heating to cause gelling to provide a coherent film which is finally solidified by further heating to cause fusing. A low plastisol viscosity is therefore desirable to enable spreading and low gelation and fusion temperatures are desirable to provide an economic process and also to avoid damage or decomposition of components of the formulation such as colourants. However, plastisols based on phthalate ester plasticisers suffer from the disadvantages that the viscosity of the plastisol can be undesirably high and that the viscosity of the plastisol can increase to an undesirable extent over time. We have found that when the cyclohexane-1,4-dicarboxylic acid esters of this invention are used as the plasticiser, the plastisols have improved viscosity stability over time, furthermore they also have improved (lower) viscosity. This is particularly useful where the plastisol is to be stored for some time between production and use, for example when it is used in coating applications.

The present invention therefore provides a plastisol composition containing from 40 to 200 parts by weight preferably 50 to 150 parts by weight, more preferably 70 to 120 parts by weight, more preferably 90 to 110 parts by weight of plasticiser per 100 parts of polyvinyl chloride, wherein the plasticiser comprises one or more cyclohexane-1,4-dicarboxylic acid esters of this invention.

In a further embodiment, the present invention provides a process for the production of flexible polyvinyl chloride comprising forming a layer from a plastisol containing from 40 to 200 parts by weight preferably 50 to 150 parts by weight, more preferably 70 to 120 parts by weight, more preferably 90 to 110 parts by weight of a plasticiser composition containing one or more cyclohexane-1,4-dicarboxylic acid esters of this invention per 100 parts by weight of polyvinyl chloride and subsequently gelling and fusing the layer by the application of heat.

The use of the di-esters of 1,4-cyclohexane dicarboxylic acids of this invention as plasticisers for polyvinyl chloride compositions also provides improved cold flex properties. Cold flex leads to an improved service temperature range and is particularly useful in the production of articles used in a wide range of temperatures. Throughout this application the cold flex properties are measured using the Clash and Berg test (ASTM D 1043-84) and the ASTM D 746 brittleness test. The improved cold flex is particularly useful when the plasticised polyvinyl chloride composition is to be used in articles which are used over a wide temperature range. In particular this is useful in applications such as roofing, tarpaulins and tents, protective films including food wrap films, wire and cable, coated fabrics, shoes and medical applications such as blood bags and tubing.

Viscosity control is important in the conversion of plastisols into useful products. For example in the preparation of vinyl floor coverings, the plastisol is spread on a surface moving at around 15 to 25 meters per minute in several layers so that the floor covering is literally built up. Typically these layers include a foam core, a decorative layer and a clear protective wear layer. The multilayer products are first gelled by contact with a heated roll and then passed into an oven where they are fused (gelled) at a temperature of from 180°C to 200°C. Often the gelling is performed after the spreading of each individual layer, starting with the base or encapsulation layer. After the gelling, the next layer can be spread. When all layers have been spread, the product is then passed into an oven to obtain full fusion of all layers together and adequate expansion of the foamed layers.

In addition to the viscosity benefits obtained by using the esters of cyclohexane-1,4-dicarboxylic acid of this invention in order to fulfill the plastisol spread coating requirements in terms of production speed (adequate viscosity and adequate gelation) a wide range of viscosity regulators, usually viscosity depressants, can be used. Traditional viscosity depressants used today include hydrocarbon fluids, such as Exxsol™ D100, or Exxsol™ D140 sold by ExxonMobil Chemical and 2,2,4-trimethylpentanediol diisobutyrate, sold as Texanol™ by Eastman Chemical or specialty esters based on oleates and laurates. WO 97/35060 discloses a plastisol composition comprising a chlorine-containing resin, a primary plasticiser and a C11-C14 straight chain or branched chain alkyl benzoate.

Although the above products perform well they have limited compatibility (only useful at low concentrations). They also have high volatility, and their effect on gelation temperature, their little or no plasticising effect, their slow fusion with the resin, their cost performance ratio and their contribution to the volatile organic carbons (VOCs) emissions from finished products has led to a search for improved products.

In a further embodiment of this invention we have found that the esters of cyclohexane-1,4-dicarboxylic acids of this invention may be used as viscosity depressants for plastisols particularly plastisols using phthalates as the plasticiser. In a further embodiment the invention therefore provides the use of an ester of a cyclohexane di-carboxylic acid according to this invention as a viscosity depressant for plastisols.

In yet a further embodiment the invention provides a plasticised polyvinyl chloride composition comprising polyvinyl chloride and from 20 to 200 preferably 40 to 180, more preferably 60 to 160, more preferably 80 to 140, more preferably 100 to 120 parts per 100 parts of polyvinyl chloride of a plasticiser composition comprising a plasticiser other than an ester of a cyclohexane-1,4-dicarboxylic acid ester and an ester of a cyclohexane-1,4-dicarboxylic acid according to this invention wherein the amount of cyclohexane-1,4-dicarboxylic acid ester present is greater than 5 wt. % of the total plasticiser content.

Examples of suitable benzenepolycarboxylic acids or derivatives thereof with which the esters of the cyclohexane-1,4-dicarboxylic acids may be used are the alkyl terephthalates such as, dimethyl terephthalate, diethyl terephthalate, di-n-propyl terephthalate, di-n-butyl terephthalate, diisobutyl terephthalate, diglycol esters of terephthalic acid, di-n-octyl terephthalate, diisooctyl terephthalate, mono-2-ethylhexyl terephthalate, di-2-ethylhexyl terephthalate, di-n-nonyl terephthalate, diisononyl terephthalate, di-n-decyl terephthalate, din-undecyl terephthalate, diisodecyl terephthalate, diisododecyl terephthalate, di-2-propyl heptyl terephthalate, di-n-octadecyl terephthalate, diisooctadecyl terephthalate, di-n-eicosyl terephthalate, monocyclohexyl terephthalate and or dicyclohexyl terephthalate.

Another suitable class are the alkyl phthalates such as, dimethyl phthalate, diethyl phthalate, di-n-propyl phthalate, di-n-butyl phthalate, di-tert-butyl phthalate, diisobutyl phthalate, monoglycol esters of phthalic acid, diglycol esters of phthalic acid, di-n-octyl phthalate, diisooctyl phthalate, di-2-ethylhexyl phthalate, di-n-nonyl phthalate, diisononyl phthalate, di-n-decyl phthalate, diisodecyl phthalate,di-2 propyl heptyl phthalate, di-n-undecyl phthalate, diisododecyl phthalate, di-n-octadecyl phthalate, diisooctadecyl phthalate, di-n-eicosyl phthalate, monocyclohexyl phthalate, dicyclohexyl phthalate; alkyl isophthalates such as monomethyl isophthalate, dimethyl isophthalate, diethyl isophthalate, di-n-propyl isophthalate, di-n-butyl isophthalate, di-tert-butyl isophthalate, diisobutyl isophthalate, monoglycol esters of isophthalic acid, diglycol esters of isophthalic acid, di-n-octyl isophthalate, diisooctyl isophthalate, di-2-ethylhexyl isophthalate, di-n-nonyl isophthalate, diisononyl isophthalate, di-n-decyl isophthalate, diisodecyl isophthalate, di-n-undecyl isophthalate, diisododecyl isophthalate, di-n-octadecyl isophthalate, diisooctadecyl isophthalate, di-n-eicosyl isophthalate, monocyclohexyl isophthalate and or dicyclohexyl isophthalate.

Further examples of commercially available benzenepolycarboxylic acid esters with which the esters of the cyclohexane carboxylic acids of this invention may be used include phthalates such as: Palatinol™ AH (Di-(2-ethylhexyl) phthalate; Palatinol™ AH L (Di-(2-ethylhexyl) phthalate); Palatinol™ C (Dibutyl phthalate); Palatinol™ IC (Diisobutyl phthalate); Palatinol™ N (Diisononyl phthalate); Palatinol™ Z (Diisodecyl phthalate); Palatinol™ 10-P (Di-(2-Propylheptyl)phthalate); Palatinol™ 711P (Heptylundecyl phthalate); Palatinol™ 911 (Nonylundecyl phthalate); Palatinol™ 11P-E (Diundecyl phthalate); Palatinol™ M (Dimethyl phthalate); Palatinol™ A (Diethyl phthalate); Palatinol™ A (R) (Diethyl phthalate); and Palatinol™ K (Dibutylglycol phthalate). Further examples are the commercially available adipates such as: Plastomoll™ DOA (Di-(2-ethylhexyl) adipate) and Plastomoll™ DNA (Diisononyl adipate).

We have found that the use of cyclohexane-1,4-dicarboxylic acid esters of this invention as plasticisers for polyvinyl chloride results in improved processability of the polyvinyl chloride compositions, due to their higher solvating strength. This improved processability is particularly useful in the transformation of the plasticised polyvinyl chloride composition. Transformations include, for example, pelletising, extrusion, injection moulding and calendering. Calendering is used in applications such as the production of roofing, protective films including stationery. Extrusion is used in the production of films, pipes, guttering and wire and cable coatings. Injection moulding is used in the production of shoes, toys and the like.

In a further embodiment the invention provides extruded articles obtained from a plasticised polyvinyl chloride composition containing from 20 to 100, preferably from 30 to 90, more preferably from 40 to 80, more preferably from 50 to 70 parts by weight of a plasticiser composition containing one or more cyclohexane-1,4-dicarboxylic acid esters of this invention per 100 parts of polyvinyl chloride.

In a further embodiment the invention provides pellets comprising polyvinyl chloride and from 10 to 100, preferably from 30 to 90, more preferably from 40 to 80, more preferably from 50 to 70 parts by weight of a plasticiser composition containing one or more cyclohexane-1,4-dicarboxylic acid esters of this invention per 100 parts of polyvinyl chloride.

In a further embodiment the invention provides injection moulded articles obtained from a plasticised polyvinyl chloride composition containing from 20 to 100, preferably from 30 to 90, more preferably from 40 to 80, more preferably from 50 to 70 parts by weight of cyclohexane-1,4-dicarboxylic acid esters of this invention per 100 parts of polyvinyl chloride.

In a further embodiment the invention provides articles obtained by calendering a plasticised polyvinyl chloride composition containing from 20 to 100, preferably from 30 to 90, more preferably from 40 to 80, more preferably from 50 to 70 parts by weight of a plasticiser composition containing one or more cyclohexane 1,4-dicarboxylic acid esters per 100 parts by weight of polyvinyl chloride.

The use of the esters of cyclohexane-1,4-dicarboxylic acids of this invention as plasticisers for polyvinyl chloride can result in an increase in the temperature required for gelation compared to compositions based on comparable phthalates. Accordingly in a further embodiment of the invention fast fusing plasticisers can be added to the composition containing the ester of the cyclohexane-1,4-dicarboxylic acid.

In plastisol applications where the di-esters of cyclohexane-1,4-dicarboxylic acid could be used such as wall coverings, flooring, toys, conveyor belts, synthetic leather. Typical formulations could be, in parts by weight

| PVC | 100 |
|---|---|
| Fast fusing plasticiser | 5-25 |
| Cyclohexane-1,4-dicarboxylic acid ester of this invention | 30-60 |
| Filler | 0-50 |
| Stabilizer | 1-4 |
| Other | 0-10 |

Alternatively when the diesters of cyclohexane-1,4-dicarboxylic acid are prepared with lower carbon number alcohol, from C5 to C8, the resulting plasticisers are faster fusing. They could be used without the need of a faster fusing plasticiser in the plastisol applications described above.

Typical formulations could be, in parts by weight

| PVC | 100 |
|---|---|
| Cyclohexane-1,4-dicarboxylic acid ester of this invention | 30-65 |
| Filler | 0-50 |
| Stabilizer | 1-4 |
| Other | 0-10 |

Alternatively typical formulations for use in the production of automotive underbody sealants which typically have high plasticiser and high filler could be in parts by weight

| PVC | 100 or PVC copolymer 100 (or combinations of the two) |
|---|---|
| Fast fusing plasticiser | 20-35 |
| Cyclohexane-1,4-dicarboxylic acid ester of this invention | 60-90 |
| Filler such as calcium carbonate | 80-150 |
| Stabilizer and other additives | 0-10 |

As a further embodiment formulations for the production of calendered floor tiles could be in parts by weight
PVC copolymer 100 or PVC 100 or combinations of the two.

| | |
|---|---|
| Plasticiser fast fusing | 10-30 |
| Cyclohexane-1,4-dicarboxylic acid ester of this invention | 20-30 |
| Epoxidized soybean oil | 0-6 |
| Filler (calcium carbonate) | 500-800 |
| pigments, stabilizers, other additives 0-10 or as needed | |

Examples of non-phthalate fast fusing plasticisers which can be used include diethylene glycol dibenzoate, , dipropylene glycol dibenzoate, alkyl sulfonic ester of phenol available from Bayer as Mesamoll, citrates such as tributylacetyl citrate, tri-2-ethylhexyl phosphate, trioctyl phosphate such as 2-ethylhexyl-isodecyl phosphate, di-2-ethylhexyl phenyl phosphate, triphenyl phosphate, tricresyl phosphate.

In the embodiments of the present invention reference to systems containing the esters of the cyclohexane-1,4-dicarboxylic acids of this invention are to systems in which the ester of the cyclohexane-1,4-dicarboxylic acid is the sole plasticiser and also to systems in which it is present in admixture with other plasticisers.

Polyvinyl chloride is available in many different forms, the variations being in the molecular weight of the polymer, the molecular weight distribution of the polymer, the particle size of the polymer particles, the particle size distribution and the surface aspect of the particles which may be coarse or smooth. Another variable in polyvinyl chloride is the degree of chain branching. The vinyl polymer may be a copolymer (e.g. a copolymer of vinyl chloride and vinyl acetate). Polymers of vinyl chloride may be obtained by suspension polymerisation or emulsion polymerisation. In suspension polymerisation, vinyl chloride monomer is suspended in water with agitation under carefully controlled temperature and pressure. The batch will also contain suspending agents and initiators. After polymerisation is complete, the batch is discharged to a stripper where unreacted monomer is removed. Finally, the suspension is washed and dried to obtain the suspension polyvinyl chloride.

Typical suspensions of polymerised polyvinyl chloride consist of agglomerated particles of size in the range 80 to 200 microns. Polyvinyl chloride produced by suspension polymerisation is typically used in dry blend applications. Emulsion polymerised polyvinyl chloride is produced in a similar manner to suspension polyvinyl chloride except that the vinyl chloride monomer is emulsified in water so that the polymerisation results in latex particles. The ratio of water to vinyl chloride monomer in emulsion polymerisation is greater than the ratio of water to vinyl chloride monomer in suspension polymerisation. Emulsion polymerised polyvinyl chloride also consists of agglomerated particles but the particles are generally smaller than the particles of suspension polymerised polyvinyl chloride. Typically, the agglomerated particles of emulsion polyvinyl chloride have a particle size in the range of 15 to 20 microns. Emulsion polymerised polyvinyl chloride is generally used in the production of plastisols which are used in coating operations where the plastisol is coated onto a substrate and is then fused by heating.

Polyvinyl chloride of particle size between 1 and 40 microns may be produced by micro suspension polymerisation.

Different forms of polyvinyl chloride are used in different applications. One important property is the mean molecular weight of the polymer. A factor known as the K value is used to indicate the mean molecular weight of polyvinyl chloride. The K value is the viscosity of a 0.005 wt % solution of the polyvinyl chloride in cyclohexanone at 25°C as measured using an Ubbelhode viscometer. The K value is the German standard DIN 53726. The K value of the polyvinyl chloride impacts the fusion temperature and gellation rate of the plasticised polyvinyl chloride composition. The K value also influences the melt viscosity of the plasticised polyvinyl chloride composition and the rate at which the composition can be foamed. Typically the higher the K value the better the mechanical properties but the lower the flowability. Accordingly, the formulator of polyvinyl chloride will select the nature of the polyvinyl chloride and the nature of the plasticiser to optimise the properties for a particular use.

Where plasticised polyvinyl chloride is to be used in calendering operations, it is preferred to use a suspension polymerised polyvinyl chloride having a K value in the range 65 to 70. Where the plasticised polyvinyl chloride is to be used in wire and cable applications, it is preferred to use a suspension polymerised polyvinyl chloride having a K value above 70. For injection moulding, a polyvinyl chloride having a K value of 60 to 67 is preferred. Emulsion polymerised polyvinyl chloride is preferred for applications where good flow of the plasticised polyvinyl chloride is required such as spread coating, as used in the manufacture of flooring, chemical foaming, dip coating and rotational moulding. For spread coating an emulsion polyvinyl chloride of K value 65 to 75 is preferred and for chemical foaming, dip-coating and rotational moulding a K value of 65 to 70 is preferred.

The esters of this invention may be obtained by the esterification of the cyclohexane-1,4-dicarboxylic acid with the alcohol or alcohol mixture or by transesterification of dimethyl cyclohexane-1,4-dicarboxylate with the alcohol or alcohol mixture. Another method by which the esters may be obtained is the hydrogenation of the corresponding terephthalates as is described in US 7,208,545.

The polyvinyl chloride and the ester of the cyclohexane-1,4-dicarboxylic acid of this invention may be mixed by the conventional formulating techniques currently used in the production of plasticised polyvinyl chloride formulations. The formulator will attempt to provide a versatile composition having a good balance of properties at reasonable cost. The formulator will be concerned to optimise the balance between end-product properties such as flexibility, low temperature performance, flame resistance, high temperature resistance, volatility, stain resistance, electrical properties and processability and the processing properties such as plastisol viscosity, fusion, dry blending, emissions and printability.

The formulations containing the polyvinyl chloride and the plasticiser may contain other additives. The majority of formulations will contain a stabiliser which counters the effects of ageing; heat stabilisers also reduce the dehydrodehalogenation of the polyvinyl chloride at the temperatures at which the formulation is processed. Stabilisers, such as benzotriazole and benzophenone, also reduce the degradation by sunlight, ozone and biological agents. The improved ultra-violet stability obtained by the use of the esters of the cyclohexane polycarboxylic acids according to the present invention may enable smaller amounts of stabilisers to be used. Typically, the formulations contain from 0.5 to 10 parts, normally from 1.5 to 3 parts, by weight of stabiliser per 100 parts of the polyvinyl chloride.

Stabilisers that provide stability during heat processing are typically metal compounds, organotin compounds, barium, cadmium and zinc salts or calcium/zinc stabilisers. Organic phosphates and polyols may also be used. Calcium/zinc stabiliser systems are used in wire and cable, foil and sheeting, wall coverings, medical applications, tubes and footwear, food packaging film and fabric coating. Barium/zinc stabiliser systems are used in foil and sheeting, flooring, wall covering, tubes and footwear and fabric coating. Tin stabilisers are used in flooring and wall covering. Zinc compounds are frequently used as a stabiliser and as a kicker in formulations used to produce foams in, for example, flooring, wall covering and fabric coating.

Other ingredients which may be added to the polyvinyl chloride formulations include fillers such as calcium carbonate, titanium dioxide or silica. When used, the filler may be present in an amount up to 150 parts, preferably up to 100 parts per 100 parts of polyvinyl chloride. Lubricants, pigments and processing acids may be included. Other ingredients will be chosen according to the use to which the formulation is to be put. For example, the formulation may contain flame retardants, blowing agents and kickers, biostabilisers, antistatic agents, viscosity regulators such as thickeners and thinners, antifogging agents which are particularly useful is packaging films and antioxidants, such as bisphenol A.

Fillers are incorporated in the formulations to reduce cost, increase the output of dry blending, increase electrical resistance, increase resistance to ultra-violet light, increase hardness, produce improved heat transmission, increase the resistance to heat deformation. Fillers can also impart anti-blocking or anti-slip performance. Examples of suitable fillers include calcium carbonate, clays such as alumino-silicates, silica, dolomite and bauxite.

The particular particle size distribution and average surface area of the filler will be chosen according to the properties it is desired to impart.

Lubricants and processing aids may be included to reduce the adhesion between polyvinyl chloride and hot machinery surfaces during processing. The lubricants also affect the frictional properties between resin particles during processing. Examples of lubricants include stearic acid and metal stearates which can also act as stabilisers. Other lubricants that may be used include petroleum waxes, silicon oil, mineral oil, synthetic oils and polyethylene waxes.

The formulations may also contain flame retardants to increase ignition time, reduce flame spreading and rate of burning. The flame retardants should have a high decomposition temperature, low volatility, a minimum effect on thermal and mechanical properties and good resistance to light and ultra-violet radiation. Examples of flame retardants that may be used include halogen containing compounds and phosphorous containing organic compounds such as triaryl, trialkyl or alkyl diaryl phosphate esters. Other materials that may be used include chloroparaffins, aluminum trihydrate Al(OH)₃ or antimony oxides Sb₂O3.

Where the formulations are used to produce foams such as in flooring materials, they can contain a blowing agent which decomposes with the evolution of gas bubbles during processing of the plastisol. Examples of suitable blowing agents include azodicarbonamide which releases nitrogen when heated to a temperature in the range 200°C to 250°C. The system may also contain kickers which control and lower the decomposition temperature of the blowing agent. For example, lead compounds such as dibasic lead phthalate, zinc oxide or barium/cadmium compounds may be used to reduce the activation temperature of azodicarbonamide to a temperature in the range 150°C to 215°C. These metal compounds can also act as stabilisers.

It was also found that all the diesters of -1,4-cyclohexane-dicarboxylic acid of the present invention are liquid at room temperature, whilst 1,4-phthalate diesters (terephthalate diesters) in which the alkyl groups are linear are typically solid close to room temperature or are having a high pour point as shown by the following Tables.
Pour point (°C)

| Alcohol | n-C4 alcohol | n-C6 alcohol | n-C8 alcohol |
|---|---|---|---|
| 1,4-Phthalic acid diester | 4 | 30 | 32 (litt) |
| 1,4-cyclohexane acid diester | -81 | -35 | -11 |

### EXAMPLES

The present invention is further illustrated but in no way limited by reference to the accompanying Examples in which diesters of cyclohexane-1,4-dicarboxylic acid were prepared by direct esterification of the acid in the presence of a titanium alkoxide catalyst in the manner described below for diisodecyl-1,4-cyclohexanoate.

### Example 1 Synthesis of diisodecyl-1,4-cyclohexanoate (DIDTCH)

Into a five-necked, 2000 ml round bottom flask equipped with a mechanical stirrer, nitrogen inductor, thermometer, Dean-Stark trap and chilled water cooled condenser were added 2 moles of 1,4-cyclohexane-dicarboxylic acid (Acros 77% Cis and 23 % Trans) and 5 moles of Isodecyl alcohol (Exxal™ 10). The Dean-Stark trap was filled with alcohol. The reaction mixture was heated to 210-220°C under a nitrogen sweep during 4 hours. The water evolved during the esterification reaction was collected in the Dean-Stark trap and was drained frequently. After sampling for complete conversion, the reactor was cooled to 90°C and a sodium carbonate solution was added to hydrolyse and/or neutralize catalyst residues and neutralize any residual monoester. The excess alcohol and residual water were removed by steam and nitrogen stripping.

The reaction time required to produce the ester of the invention is similar/identical to phthalate and much shorter than the time required for esters from terephthalic acid.

### Example 2

The following PVC plastisols were then prepared to compare the solution temperature, Brookfield viscosity and gelation temperature of plastisols based on ortho-phthalates, terephthalates, 1,2-cyclohexanoates and 1,4-cyclohexanoates.
100 parts PVC (Solvin 382 G)
60 parts of ester plasticiser
1 part of a conventional stabilizer

The solution temperature of plasticisers is defined as the temperature at which a set amount of PVC gets dissolved in a set amount of plasticiser. The solution temperature is not only influenced by the plasticiser type but also by the PVC resin type and in particular the K-Value. (DIN 53408 Testing of Plastics; Determination of Solubility Temperature of Polyvinyl Chloride (PVC) in Plasticisers (1967.06.01)

Brookfield viscosity was measured at ambient temperature.

The gelation temperature of the plastisols was determined by an Anton Paar Physica Rheometer MCR 301. The instrument is used in oscillation mode, frequency 1hz, amplitude 0.01% and the heating rate is 10°C/min. The gelation temperature is reported when G' (Elastic modulus) is equal to 10⁴ Pa.

**Table 1: Ortho-phthalates:**

| Plasticiser | Solution Temp. (°C) | Brookfield viscosity (mPa.s) 2 hours | Brookfield viscosity (mPa.s) 1 day | Gelation Temp. (°C) |
|---|---|---|---|---|
| J77(1) | 113 | 1560 | 1580 | 89 |
| DOP(2) | 120 | 2300 | 2800 | 90 |
| DINP(3) | 126 | 2550 | 2800 | 99 |
| DIDP(4) | 132 | 3850 | 3400 | 111 |

| | | | | |
|---|---|---|---|---|
| (1) Diisohepthyl phthalate (Jayflex™ 77) (2) Di 2-ethylhexyl phthalate (3) Diisononyl phthalate (4) Diisodecyl phthalate | | | | |

**Table 2: Terephthalates:**

| Plasticiser | Solution Temp. (°C) | Brookfield viscosity (mPa.s) 2 hours | Brookfield viscosity (mPa.s) 1 day | Gelation Temp. (°C) |
|---|---|---|---|---|
| DnBT(1) | 97 | 1500 | 2250 | 73 |
| DIC6TP(2) | 117.5 | | | 89 |
| DIHTP(3) | 125 | | | |
| DIHNTP (50/50) (4) | 143 | 3050 | 2650 | 125 |
| DOTP (5) | 134 | 2750 | 2550 | 112 |
| DINTP(6) | 147 | Not determined | | 137.5 |

| | | | | |
|---|---|---|---|---|
| (1) Di-n-butyl terephthalate (2) Diisohexyl terephthalate (3) Diisoheptyl terephthalate (4) The diester of terephthalic acid and a 50/50 (by mole) blend of the commercial alcohols Exxal™ 7 and Exxal™ 9 (5) Dioctyl terephthalate (6) Diisononyl terephthalate | | | | |

**Table 3: 1,2-Cyclohexanoate or hydrogenated ortho-phthalate diesters**

| Plasticiser | Solution Temp. (°C) | Brookfield viscosity (mPa.s) 2 hours | Brookfield viscosity (mPa.s) 1 day | Gelation Temp. (°C) |
|---|---|---|---|---|
| DIC6CH(1) | 112.5 | 1400 | 2250 | 86 |
| DIHCH(2) | 124 | | 1450 | 95 |
| DIHNCH(3) (50/50) | 137 | 1400 | 2400 | 116 |
| DC9CH(4) | 149 | 1550 | 1550 | 136 |
| DINCH(5) | 141 | 1400 | 1350 | 133 |
| DIDCH(6) | 157 | Not determined | | |
| DPHCH(7) | 167 | Not determined | | 159 |

| | | | | |
|---|---|---|---|---|
| (1) Diisohexyl-1,2-cyclohexanoate (2) Diisoheptyl-1,2-cyclohexanoate (3) Diester of -1,2-cyclohexane di-carboxylic acid and a 50/50 (by mole) mixture of the commercial alcohols Exxal™ 7 and Exxal™ 9 (4) Diisononyl-1,2-cyclohexanoate (5) Hexamol DINCH from BASF (6) Diisodecyl-1,2-cyclohexanoate (7) Di 2-propylheptyl-1,2-cyclohexanoate | | | | |

**Table 4: 1-4 Cyclohexanoate diesters:**

| Plasticiser | Solution Temp. (°C) | Brookfield viscosity (mPa.s) | Brookfield viscosity (mPa.s) | Gelation Temp. (°C) |
|---|---|---|---|---|
| | | 2 hours | 1 day | |
| DInC6TCH(1) | 113 | 1150 | 1875 | 82 |
| DIC6TCH(2) | 112 | 1150 | 1800 | 83 |
| DIHTCH(3) | 128 | 1100 | 1400 | 92 |
| DIHNTCH(4) (50/50) | 135 | 1200 | 1250 | 110 |
| DIDTCH(5) | 154 | Not determined | Not determined | 144.5 |

| | | | | |
|---|---|---|---|---|
| (1) Di-n-hexyl-1,4-cyclohexanoate (2) Diiso-hexyl-1,4-cyclohexanoate (3) Diiso heptyl-1,4-cyclohexanoate (4) The diester obtained from 1,4-cyclohexane dicarboxylic acid and a 50/50 (by mole) blend of commercial alcohols Exxal™ 7 and Exxal™ 9 (5) Diisodecyl-1,4- cyclohexanoate | | | | |

The data shows that the diesters of 1,4-cyclohexane-dicarboxylic acid of this invention are viable alternative plasticisers to phthalates and have lower gelation temperature and 2 hour and 1 day Brookfield viscosity than comparable diesters of 1,2-cyclohexane-dicarboxylic acid, therefore showing better processability and storage stability.

### Example 3

The following PVC wet blends were prepared
100 parts PVC (Solvin 271 PC)
50 parts of ester plasticiser
1.5 part of a conventional stabilizer
to compare the processability and fluxing on a Two Roll Mill.

The wet blends (above formulations) were milled on a Two Roll Mill under the following operating conditions. The temperature of the front roll was 169°C, and the temperature of the back roll was 165 °C. The rolls were rotating at 20 rpm to give a mixing time of 8 minutes. The sheet was formed on the hottest roll. The initial roll speed was at 5 rpm, as soon as a sheet was formed, the Roll Mill speed was increased to 20 rpm and the compound was mixed until an optimum mixing and fusion was achieved. The time to complete the cycle was recorded.

| Plasticiser | Time to prepare a sheet | Aspect 1=best,3=worse | Shore A Hardness | Clash and Berg Temp (°C) |
|---|---|---|---|---|
| DIDP | 8'20" | 1 | 88.8 | -16 |
| DIDTCH | 10' | 2 | 90.4 | -22.6 |
| DPHCH | 13'10" | 3 | 91.9 | -20.6 |

The data show that shorter flux time are observed with 1,4-cyclohexane C10 alcohol ester (DIDTCH) compared to the 1,2-cyclohexane C10 alcohol ester (DPHCH). Also the appearance and aspect (homogeneous mix) is much better and closer to the ortho-phthalates. The cold flex properties, measured using the Clash and Berg test (ASTM D1043-84), were shown to improve with DIDTCH compared to DIDP and DPHCP. These tests indicated a smoother and better processability (higher solvating strength) of 1,4-cyclohexanoatediesters compared to the 1,2 cyclohexane diesters and again showing that the 1,4-cyclohexane diesters of the invention are good replacements for phthalate plasticisers.

## Claims

1. The use as a plasticiser of one or more di-esters of cyclohexane-1,4-dicarboxylic acid wherein the alkyl groups in the ester are of carbon number 5 to 13.

2. The use according to Claim 1 as plasticisers for polyvinyl chloride (PVC).

3. The use according to Claim 1 as plasticisers for polyurethane, acrylics, silicones or polysulphides.

4. A plastisol comprising a fluid or a paste consisting of a mixture of polyvinyl chloride and a plasticiser containing 40 to 200 parts by weight of a di-ester of cyclohexane 1-4 di-carboxylic acid wherein the alkyl groups in the ester are of carbon number 5 to 13 as a plasticiser per 100 parts of PVC.

5. A plasticised PVC formulation containing from 30 to 50 parts, by weight of a diester of cyclohexane 1,4 dicarboxylic acid wherein the alkyl groups in the ester are of carbon number 5 to 13 per 100 parts of PVC.

6. A plasticiser PVC formulation containing from 40 to 100 parts of a plasticiser comprising a diester of cyclohexane 1,4 dicarboxylic acid wherein the alkyl groups in the ester are of carbon number 5 to 13 per 100 parts by weight of PVC.

7. The use of a plasticised PVC formulation according to Claim 5 or Claim 6 for the production of pipes, wire and cable coatings, floor tiles, window shades, films, blood bags and medical tubing.

8. The use of a plasticised PVC formulation according to Claim 5 or Claim 6 for the production of sheeting, upholstery, medical tubing, garden hoses, pool liners, water beds and the like.

9. The use of a plasticised PVC formulation according to Claim 5 or Claim 6 for the production of coated cloth, toys, shoe soles and the like.

10. The use of the di-esters according to any of Claims 1 or Claim 2 as plasticisers for PVC together with an additional plasticiser.

11. The use according to Claim 10 in which the additional plasticiser is selected from adipate esters, phthalate esters, trimellitate esters and various polymeric plasticisers.

12. The use as a viscosity depressant for plastisols of one or more diesters of cyclohexane-1,4 dicarboxylic acid wherein the alkyl groups of the ester are of carbon number 5 to 13.
